# EUROPEAN PATENT SPECIFICATION

(11) **EP 3 156 681 B1**
(45) Date of publication and mention of the grant of the patent: **21.04.2021**
(21) Application number: 16193007.8
(22) Date of filing: 10.10.2016
(51) Int. Cl.: F16D 51/22, F16D 65/09, F16D 125/30

(54) **BRAKING AXLE STRUCTURE FOR VEHICLES**
BREMSACHSENSTRUKTUR FÜR FAHRZEUGE
STRUCTURE D'AXE DE FREINAGE POUR VÉHICULES

(30) Priority: 13.10.2015 IT IT20151216 U
(43) Date of publication of application: 19.04.2017
(73) Proprietor: R.P.F. S.p.A., 21040 Uboldo (Varese) (IT)
(72) Inventor: RADRIZZANI, Flavio, 21040 Uboldo (Varese) (IT)
(74) Representative: Rapisardi, Mariacristina

(56) References cited:
- EP-A1- 0 674 113

## Description

The present invention relates to a braking axle structure for vehicles.

As it is known, there are currently vehicles on the market that use braking axles generally each consisting of a main structure called the axle body, with a quadrangular conformation having at each end, known as a spindle, a wheel hub supported by bearings and a braking unit.

In order to exercise its vehicle braking function in the best possible way, the braking unit must have its structure fixed firmly to the axle body, which is only obtained by reaching perfect coaxiality of each mechanical part of the brake unit with the axle body.

The method that is currently most common for fixing the braking unit to the axle body is through welding.

EP 0 674 113 A1 discloses a breaking axle for vehicles where the brake unit is constrained to the axle body through welding.

However, in the manufacturing process of the axle body with a quadrangular section, the sections are obtained by lamination and the geometrical tolerances are, therefore, rough.

This means that it is very difficult to ensure precise coaxiality of the various elements during the creation of a braking axle structure of the known type.

The solution currently used to overcome the drawbacks described above is to leave ample clearance between the axle body and the brake structure, which is then positioned with a suitable centring tool using the axle spindle as a reference

The result is not however satisfactory since the cooling of the welding can alter the precision of the process both in terms of concentricity and planarity and perpendicularity of the load-bearing structure of the brake with respect to the wheel axle, with the consequent geometric errors described above.

The task proposed by the present invention is to offer a braking axle structure for vehicles that eliminates the drawbacks of the prior art mentioned above.

Within this task an object of the invention is to offer a braking axle structure for vehicles that always provides maximum efficiency of the braking unit thanks to the perfect coaxiality between the braking unit and the axle body.

It is yet another object of the invention to offer a braking axle structure for vehicles which, while using the traditional welding systems, prevents said operation causing deformations in relation to concentricity, planarity and perpendicularity of the brake unit with respect to the axle body.

A further object of the invention is to offer a braking axle structure for vehicles that does not have any clearance in the coupling of the braking unit with the axle body excluding geometric adjustment errors while the welding is cooling.

A further object of the invention is to offer a braking axle structure for vehicles that, in addition to the advantages described above is easy to perform and has a contained cost while guaranteeing a higher reaction force than the twisting moment to which it is subject with respect to braking axles of the known type.

This task as well as these and other objects are reached by a braking axle structure for vehicles according to claim 1.

The subordinate claims better specify the characteristics of the braking axle structure for vehicles according to the invention.

The braking axle structure for vehicles, according to the invention, is represented by way of non-limiting example in the appended drawings wherein:

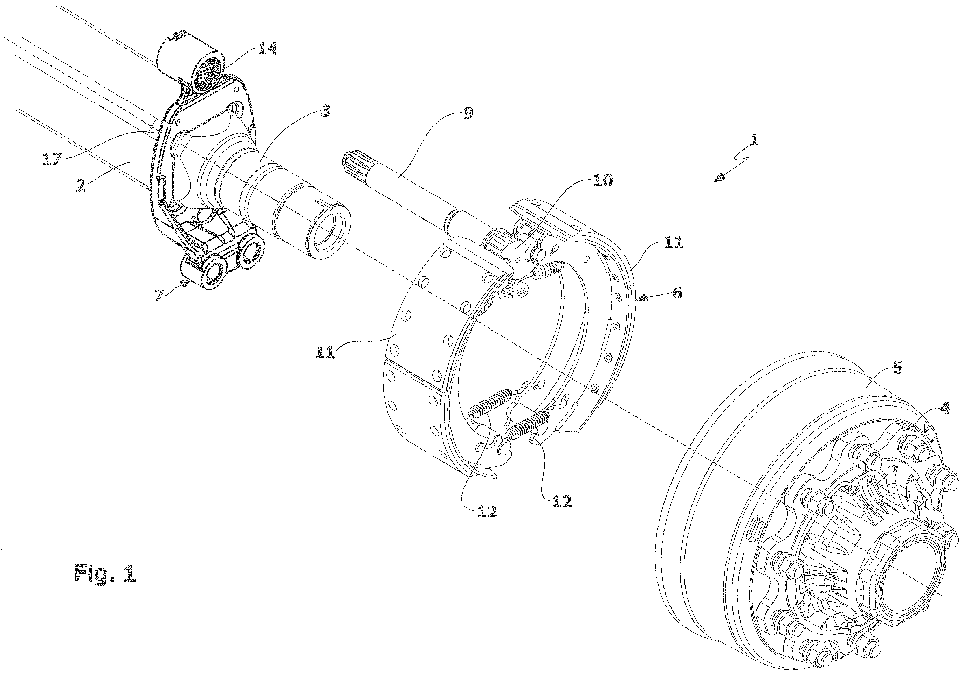

Fig. 1 is an exploded view of the braking axle structure for vehicles according to the invention;

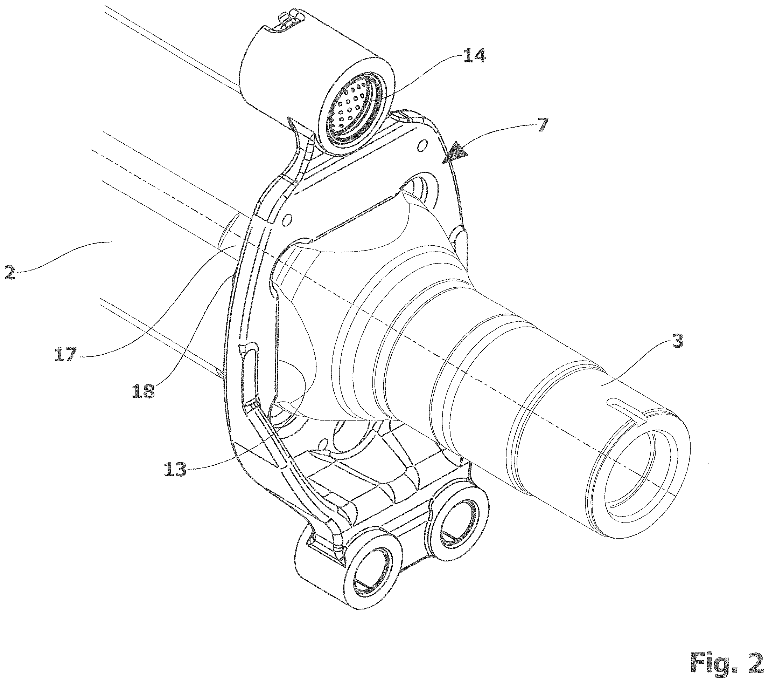

Fig. 2 is a perspective partial view from the front of the braking axle structure for vehicles according to the invention;

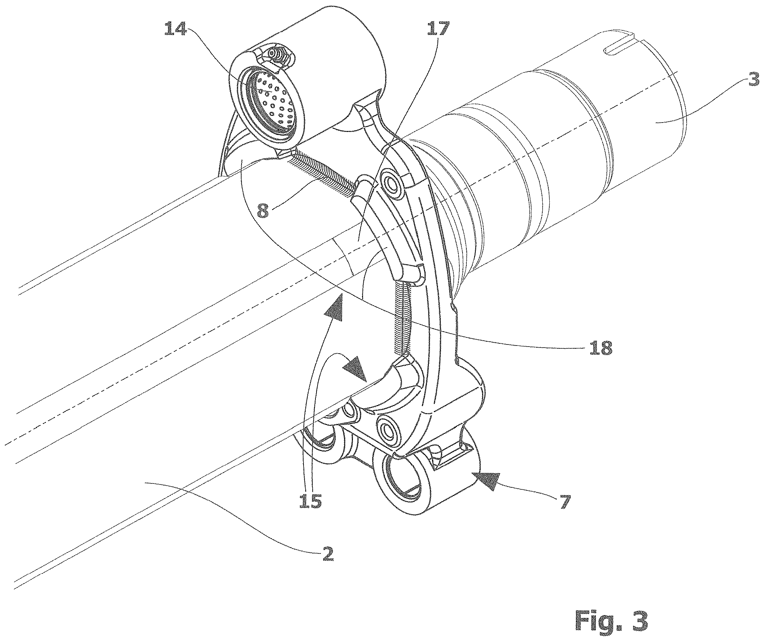

Fig. 3 is a perspective partial view from the back of the braking axle structure for vehicles according to the invention; and

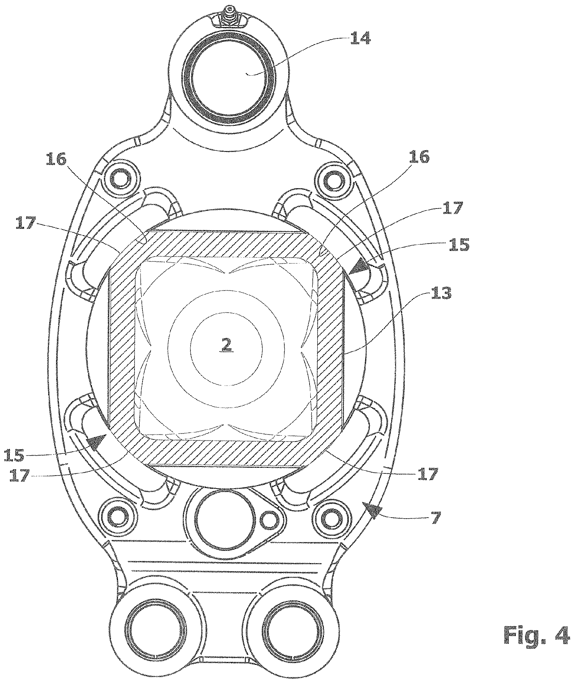

Fig. 4 is a frontal raised view of the sectional rear part of the braking axle structure for vehicles according to the invention;
Figures 5 and 6 represent different embodiments of the curvilinear surfaces according to the invention.

With particular reference to the figures described above the braking axle structure according to the invention.

With particular reference to the figures described above the braking axle structure for vehicles according to the invention is indicated overall by reference number 1.

In particular, the braking axle structure 1 comprises an axle body 2 having, on each end or spindle 3, a wheel hub 4 provided with the related drum 5 of the braking unit 6 and a load-bearing structure 7 of the braking unit 6 and related accessories (not shown) which is constrained to the axle body through a welding 8.

The braking unit 6 comprises a shaft 9 of the control cam 10 of the two jaws 11 of the drum brake which are movable in contrast and by the action of two springs 12. The load-bearing structure 7 is defined by a flange having in its central part an opening 13 adapted to receive the axle body 2 which has a quadrangular conformation and, above the opening 13, there is a seat 14 for housing the shaft 9 of the cam 10.

Advantageously, the axle body 2 and the load-bearing structure 7 have connection means, generically indicated by number 15, for their mutual precise coaxial coupling, respectively on first curvilinear surfaces 16 on the flange and on second curvilinear surfaces 17 on the axle body, able to withstand the thermal expansion generated by the welding 8.

The connection means 15 extend along the axle body 2 for a limited length which is, substantially, slightly greater than the thickness of the support structure 7 and are adapted to define perfect concentricity, planarity and perpendicularity between the axle body 2 and the load-bearing structure 7.

In particular, the first curvilinear surfaces 16 of the load-bearing structure comprise first projections 18 equidistant from one another whose inner surface has a cylindrical axial generatrix.

The second curvilinear surfaces 17 of the axle body 2 also have surfaces that are equidistant from the axis of the spindle 3 and of the axis of the body 2, having a cylindrical axial generatrix.

Advantageously, both the generatrix of the first surfaces and that of the second surfaces are substantially the same as one another so that the control shaft 9 of the cam 10 of the brake unit 6 is perfectly coaxial with its housing seat 14 whose axis has the same orientation as the axis of the spindle 3 and of the axle body 2.

Through such a solution, obtained with a mechanical turning process performed both on the load-bearing structure 7 and on the axle body 2, the first and second curvilinear surfaces 16 and 17 are obtained, which have a conjugated conformation between one another and are precisely coupled without any clearance, giving the structure perfect coaxiality able to optimise the efficiency of the brake unit and the performance of the axle body.

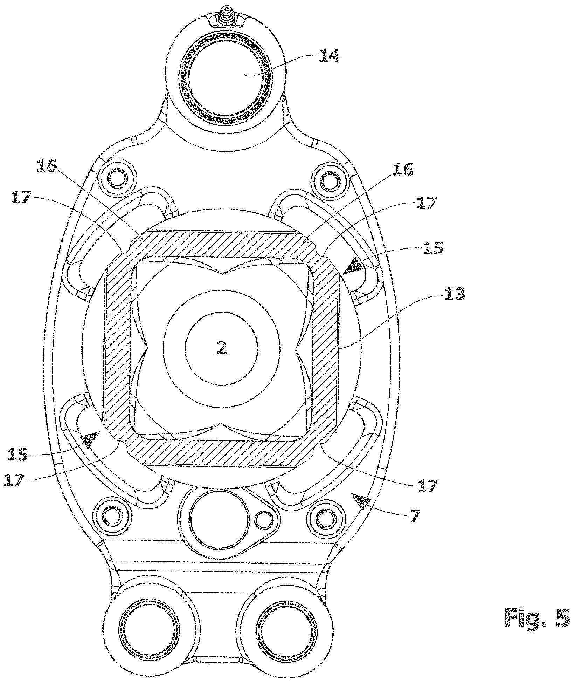

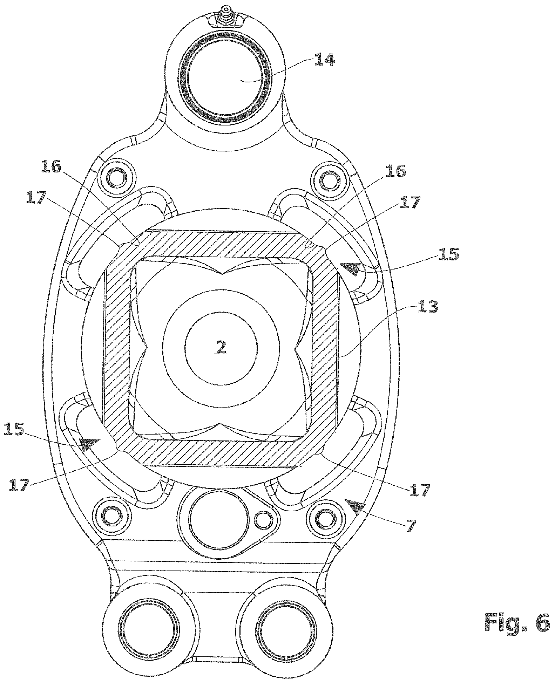

The curvilinear surfaces, for example as represented in figures 5 and 6, may have a sinusoidal conformation able to offer an equal and opposite reaction to the twisting moment that is generated during the braking action.

Furthermore, the coupling between the load-bearing structure 7 and the axle body 2 is obtained through weldings 8 that only affect the zones of the axle body and the load-bearing structure comprised between the projections 18 so as to limit their extension and, consequently, their negative effect on the deformation of the materials while they are cooling

Should the welding 8 affect the zones of the axle body 2 and of the load-bearing structure 7 also on the projections 18, there would be the advantage of having a notably higher reaction to the twisting movement while maintaining the advantages of the coupling according to the invention of cancelling the deformations while the weldings are cooling.

In the technical solution represented in figures 5 and 6 any weldings would not be affected by the twisting moment.

The materials and dimensions of the braking axle structure for vehicles, according to the invention, may be any according to the requirements and the state of the art.

## Claims

1. A braking axle structure for vehicles, comprising an axle body (2) having, on each end or spindle (3), a wheel hub (4) provided with the related drum (5) of the brake unit (6) and a load-bearing structure (7) of said brake unit defined by a flange having in its central part an opening (13) receiving the axle body (2), said flange being constrained to said axle body (2) through welding (8), **characterised in that** said axle body (2) and said flange have connection means (15) withstanding the thermal expansion generated by said welding (8) and providing mutual precise coaxial coupling of first curvilinear surfaces (16) on said flange and second curvilinear surfaces (17) on said axle body (2), said second curvilinear surfaces (17) of said axle body (2) being equidistant from the axis of said spindle (3) and said axle body (2), and having a cylindrical axial generatrix which is substantially the same as that of said first curvilinear surfaces (16).

2. The braking axle structure according to the preceding claim **characterised in that** said axle body (2) has a quadrangular section.

3. The braking axle structure according to one or more of the preceding claims **characterised in that** said connection means (15) extend along said axle body (2) for a limited length.

4. The braking axle structure according to one or more of the preceding claims **characterised in that** said first curvilinear surfaces (16) of said load-bearing structure comprise projections (18) equidistant from one another whose inner surface has a cylindrical axial generatrix.

5. The braking axle structure according to one or more of the preceding claims **characterised in that** the control shaft (9) of the cam (10) of said brake unit (6) is perfectly coaxial with its housing seat (14) whose axis has the same orientation as the axis of said spindle (3) and of said axle body (2).

6. The braking axle structure according to claim 5 **characterised in that** said welding (8) affects the zones of said axle body (2) and of said load-bearing structure (7) comprised between said projections (18).

7. The braking axle structure according to claim 5 **characterised in that** said welding (8) affects the zones of said axle body (2) and of said load-bearing structure (7) at said projections (18).

## Patentansprüche

1. Bremsachsenstruktur für Fahrzeuge, umfassend einen Achskörper (2) aufweisend, an einem jeden Ende oder Achsschenkel (3), eine Radnabe (4), die mit der zugehörigen Trommel (5) der Bremseinheit (6) ausgestattet ist und eine Tragstruktur (7) der Bremseinheit, die durch einen Flansch definiert ist, die in ihrem mittleren Teil eine Öffnung (13) aufweist, die den Achskörper (2) aufnimmt, wobei der Flansch durch Schweißen (8) am Achskörper (2) festgespannt ist, **dadurch gekennzeichnet, dass** der Achskörper (2) und der Flansch über Verbindungsmittel (15) verfügen, die der durch das Schweißen (8) erzeugten thermischen Ausdehnung standhalten und für eine gegenseitige präzise koaxiale Kopplung der ersten krummlinigen Flächen (16) auf dem Flansch und der zweiten krummlinigen Flächen (17) auf dem Achskörper (2) sorgen, wobei die zweiten krummlinigen Flächen (17) des Achskörpers (2) von der Achse des Achsschenkels (3) und des Achskörpers (2) äquidistant sind und eine zylindrische axiale Generatrix aufweisen, die im Wesentlichen die gleiche wie die der ersten krummlinigen Flächen (16) ist.

2. Bremsachsenstruktur nach dem vorhergehenden Anspruch, **dadurch gekennzeichnet, dass** der Achskörper (2) einen viereckigen Querschnitt aufweist.

3. Bremsachsenstruktur nach einem oder mehreren der vorhergehenden Ansprüche, **dadurch gekennzeichnet, dass** die Verbindungsmittel (15) sich auf einer begrenzten Länge entlang des Achskörpers (2) erstrecken.

4. Bremsachsenstruktur nach einem oder mehreren der vorhergehenden Ansprüche, **dadurch gekennzeichnet, dass** die ersten krummlinigen Flächen (16) der Tragstruktur äquidistant voneinander liegende Vorsprünge (18) aufweisen, deren Innenfläche eine zylindrische axiale Generatrix aufweist.

5. Bremsachsenstruktur nach einem oder mehreren der vorhergehenden Ansprüche **dadurch gekennzeichnet, dass** die Steuerwelle (9) der Nocke (10) der Bremseinheit (6) vollständig koaxial mit ihrem Gehäusesitz (14) ist, deren Achse die gleiche Ausrichtung wie die Achse des Achsschenkels (3) und des Achskörpers (2) aufweist.

6. Bremsachsenstruktur nach Anspruch 5, **dadurch gekennzeichnet, dass** das Schweißen (8) die Zonen des Achskörpers (2) und der Tragstruktur (7) betrifft, die zwischen den Vorsprüngen (18) enthalten sind.

7. Bremsachsenstruktur nach Anspruch 5, **dadurch gekennzeichnet, dass** das Schweißen (8) die Zonen des Achskörpers (2) und der Tragstruktur (7) an den Vorsprüngen (18) betrifft.

## Revendications

1. Structure d'essieu de freinage pour véhicules, comprenant un corps d'essieu (2) comportant, à chaque extrémité ou fusée (3), un moyeu de roue (4) pourvu du tambour (5) correspondant de l'unité de freinage (6) et une structure porteuse (7) de ladite unité de freinage définie par une bride comportant dans sa partie centrale une ouverture (13) recevant le corps d'essieu (2), ladite bride étant fixée audit corps d'essieu (2) par soudage (8), **caractérisée en ce que** ledit corps d'essieu (2) et ladite bride comportent des moyens de raccordement (15) résistant à la dilatation thermique générée par ledit soudage (8) et fournissant un couplage coaxial mutuel précis de premières surfaces curvilignes (16) sur ladite bride et de secondes surfaces curvilignes (17) sur ledit corps d'essieu (2), lesdites secondes surfaces curvilignes (17) dudit corps d'essieu (2) étant équidistantes de l'axe de ladite fusée (3) et dudit corps d'essieu (2), et comportant une génératrice axiale cylindrique étant substantiellement la même que celle desdites premières surfaces curvilignes (16).

2. Structure d'essieu de freinage selon la revendication précédente, **caractérisée en ce que** ledit corps d'essieu (2) a une section quadrangulaire.

3. Structure d'essieu de freinage selon une ou plusieurs des revendications précédentes, **caractérisée en ce que** lesdits moyens de raccordement (15) se prolongent le long dudit corps d'essieu (2) sur une longueur limitée.

4. Structure d'essieu de freinage selon une ou plusieurs des revendications précédentes, **caractérisée en ce que** lesdites premières surfaces curvilignes (16) de ladite structure porteuse comprennent des saillies (18) équidistantes les unes des autres dont la surface intérieure comporte une génératrice axiale cylindrique.

5. Structure d'essieu de freinage selon une ou plusieurs des revendications précédentes, **caractérisée en ce que** l'arbre de commande (9) de la came (10) de ladite unité de freinage (6) est parfaitement coaxial avec son siège de logement (14) dont l'axe possède la même orientation que l'axe de ladite fusée (3) et dudit corps d'essieu (2).

6. Structure d'essieu de freinage selon la revendication 5, **caractérisée en ce que** ledit soudage (8) affecte les zones dudit corps d'essieu (2) et de ladite structure porteuse (7) comprises entre lesdites saillies (18).

7. Structure d'essieu de freinage selon la revendication 5, **caractérisée en ce que** ledit soudage (8) affecte les zones dudit corps d'essieu (2) et de ladite structure porteuse (7) en correspondance desdites saillies (18).
